# EUROPEAN PATENT APPLICATION

(11) **EP 1 845 366 A1**
(43) Date of publication of application: **17.10.2007**
(21) Application number: 06712681.3
(22) Date of filing: 31.01.2006
(51) Int. Cl.: G01N 21/64

(54) **ANALYSIS PROCESSING METHOD AND DEVICE**

(30) Priority: 01.02.2005 JP 2005025410
(71) Applicant: Universal Bio Research Co., Ltd., Matsudo-shi, Chiba 271-0064 (JP)
(72) Inventor: TAJIMA, Hideji, ngou, Matsudo-shi Chiba, 2710064 (JP); IKEDA, Hideo, ngou, Matsudo-shi Chiba, 2710064 (JP); SEGAWA, Osamu, ngou, Matsudo-shi Chiba, 2710064 (JP)
(74) Representative: Bohnenberger, Johannes
(86) International application number: PCT/JP2006/301538
(87) International publication number: WO 2006/082805

(57) **Abstract**

The invention relates to image processing, and to a method and device for recognizing the reaction results of a test sample in which various reagents are arranged on a surface, by image analysis, and assay. An object is to provide an analysis processing method and an analysis processing device which can obtain analysis results efficiently and with high accuracy, for objects which are integrated using a wound body which is wound with a linear base substance, and for which positions are uncertain. An analysis processing method for performing analysis based on optical information from a wound object which is wound with a linear base substance in which biological substances of previously determined types are immobilized, and a plurality of these immobilized spots are arranged at previously determined positions, includes: detecting a partial region belonging to the spots, by means of optical information obtained by scanning a surface of the wound body; specifying the spots belonging thereto, based on the detected partial region for the detected spots; and performing analysis of the spots based on the optical information from the specified spots.

## Description

### [Technical Field]

The present invention relates to image processing, and to a method and device for recognizing the reaction results of a test sample in 4 which various reagents are arranged on a surface, by image analysis, and assay. The invention is used for manufacturing arrays of three dimensions such as a columnar shape, on which are arrayed samples containing various biological material such as for example nucleic acid, polynucleotides, olygonucleotides, proteins, sugars, immunity substances and the like, and is particularly useful in the fields where it is necessary to perform monitoring and processing using these arrayed various samples (specimens), for example in various fields of; chemistry including biological chemistry, medicine, health, pharmaceuticals, food stuffs, agriculture, animal husbandry, marine products, and technology.

### [Background Art]

Heretofore, planar arrays on which for example different genetic specimens of several thousand various types, or biological material of various olygonucleotides and the like are arrayed in a plane, and these are reacted with a target biological material which has been discriminated with a phosphorescent material or the like, have become widely used in the inspection and examination of target biological material (refer to Patent Document 1). In order to create this planar array, a small amount of solution is withdrawn from a container containing a solution in which is suspended a sample of for example the aforementioned specimen, and transferred to a spotting position on the plane, and the liquid is contacted drop by drop on the surface (Patent Document 2).

Patent Document 1: Japanese Patent Number 10-503341
Patent Document 2: U.S. Patent Number 6040193
Patent Document 3: International Patent Publication No. WO02/45842 (pamphlet)
Patent Document 4: International Patent Publication No. WO01/53831 (pamphlet)

Incidentally, in order to arrange the several thousand various types of biological material at a high density on the small surface, then in the respective spot positions, it is necessary to arrange minute droplets of solution matching with these positions, on a very small area. However, if the amount of remaining solution is minute, the encounterability or the reactivity with the target biological material becomes deficient. Therefore it is necessary to arrange an amount more than a certain level. On the other hand, if the amount in the respective spot positions is too large, there is the possibility that the solutions are intermixed between the adjacent spots, and with higher densities for the arrangement of large numbers of biological materials, there is the possibility of problems arising in the reliability of the examination or inspection, or in the reactivity with the target biological material.

Therefore, the present inventors have developed a method of arranging material in a high density by arranging biological materials of the genetic material or the like on a linear base substance of a fiber or filament or the like, and winding the base substance on which the material is arranged to give a two stage integration (Patent Document 4). Consequently, even if the arrangement of the biological material on the base substance itself is not arranged at a high enough density, the finally obtained wound body gives an arrangement of material in a high density. Therefore, in the arrangement on the base substance, the spacing between the adjacent spots, and the amount of biological material in the respective spot positions can be made a long or large number arrangement to a degree to obtain reliability and reactivity.

### [Disclosure of Invention]

### [Problems to be Solved by the Invention]

However, regarding the wound body, different to the conventional array where the substance is arranged on a two dimensional plane, this is constructed by winding a flexible cord like base substance. Therefore, this has a problem in that, regarding the respective spot positions in the wound condition, there are indeterminate factors that can vary due to aspects of the winding, positional deviation due to winding, the shape of the core or the base substance, the nature or magnitude of elasticity, the stretchability of the base substance, or the size of the tension applied to the base substance. If these indeterminate factors are not taken into consideration, there is the possibility that accurate correspondence with the biological material which is bonded to or arranged on the spot, and the measured respective spot positions cannot be obtained.

Furthermore, regarding the wound body, this has a problem in that the materials are stored beforehand in a large number of wells of a microplate, and since the materials obtained from the wells are wound on spot positions once these are arranged on the base substance, and since it is necessary to perform spotting on the base substance efficiently, the relationship between the position of the biological material on the wound body, and the initial position of the wells of the microplate, is different to the case of the arrangement on a plane, so that there is the likelihood of the handling becoming complicated.

Therefore, a first object of the present invention is to provide an analysis processing method and an analysis processing device which can obtain analysis results efficiently and with high accuracy, for objects which are integrated using a wound body which is wound with a linear base substance, and for which positions are uncertain.

A second object is to provide an analysis method and an analysis processing device where analysis is possible with a simple control, using a wound body which is wound with a linear base substance.

A third object is to provide an analysis processing method and a device therefor, which can accurately perform correspondence of spot positions of a wound body which is wound with a linear base substance, with biological material which is provided on the spot positions.

### [Means for Solving the Problems]

A first aspect of the invention for addressing the above technical problems, is an analysis processing method for performing analysis based on optical information from a wound object which is wound with a linear base substance in which biological substances of previously determined types are immobilized on spots, and a plurality of these immobilized spots are arranged at previously determined positions, including: detecting a partial region belonging to the spots, by means of optical information obtained by scanning a surface of the wound body; specifying the spots belonging thereto, based on the detected partial region for the detected spots; and performing analysis of the spots based on the optical information from the specified spots.

Here "linear base substance" is for example a nylon material, with a plurality of spots arranged on the surface for example leaving a predetermined spacing. The various types of biological materials that are immobilized on the spots of the base member, are ones which can bond with a target biological substance which is recognized by its fluorescent quality or the like, or are ones which are bonded due to the structure or properties of the target biological substance, or are not bonded, and are ones which by measuring their bonding positions, the structure or properties of the target biological substance can be analyzed. "Biological substance" is for example substances such as; genetic materials of nucleic acid, DNA, nucleotides, olygonucleotides, RNA, mRNA, tRNA, rRNA, and plasmids, immunity substances such as antigens and antibodies, and amino acids, proteins, sugars, and hormones.

Since "a partial region belonging to the spots" is detected, then at the time of scanning and measurement, there is a case of scanning a route of a width such that the partial region of the spots can only pass, and there is a case of scanning and measuring a route through which the whole region of the spots passes, and for the obtained image data, scanning a route of a width through which only the partial region of the spots can pass. Here, regarding the partial region, in a plurality of pixels constituting the spot, the pixels have a size of a constant range.

A second aspect of the invention is an analysis processing method wherein detecting the partial region is performed based on image data obtained by scanning the surface of the wound body.

A third aspect of the invention is an analysis processing method wherein, detecting the partial region is performed by detecting a partial region of respective spots by a line scan, for the image data, and specifying the spot is performed by setting an inspection box which encloses the partial region or all regions of the spot, and in a case where all regions of the spot are not contained inside the inspection box, enlarging the inspection box, and for the specified spot, separating into a case where the size of the inspection box does not satisfy a predetermined set value, and a case where this is above the set value, and judging the spot to be valid or invalid, and analyzing the optical information from the spot. Here, in the case where a spot does not satisfy the predetermined set value, this is considered to be a spot due to dirt, blotches or the like, and hence this is judged to be invalid. In the case where the spot is above the predetermined set value, the spot is judged to be valid. Moreover, the spot comprises a plurality of continuous pixels.

Furthermore, the shape of the inspection box may be a rectangular shape or square shape. Moreover, the set value of the inspection box may be separated into a plurality of types of settings and a plurality of types of spots. As a result, recognition of the spots can be easily and effectively performed. Furthermore, differentiation of various types of spots with different sizes can be accurately and effectively performed.

A fourth aspect of the invention is an analysis processing method including: setting a bounding box for where the inspection box is enlarged until it contains the spot; and specifying the spot by judging a center or a size of the spot, based on the bounding box.

A fifth aspect of the invention is an analysis processing method comprising; providing a marker as a reference for specifying a position of a spot on which biological material is immobilized, as an object of analysis of the image data, and on the other hand determining if the detected spot is a spot due to the biological material, or a spot due to the marker, based on the size of the bounding box. The determination at this time may also be performed based on a labeling substance capable of identifying the labeling substance for labeling the target biological material.

A sixth aspect of the invention is an analysis processing method wherein specifying the spot includes: setting an estimation base substance in which a position of the linear base substance on which the spots are arrayed in a predetermined spacing is previously estimated; determining whether or not the estimation base substance passes through the center of the spot which is calculated based on the bounding box, and in the case where it does not pass through the center, performing positioning to correct the position of the estimation base substance, and setting this position as the position of the base substance.

A seventh aspect of the invention is an analysis processing method wherein specifying the spot includes: setting an estimation spot for which the position of the spot is previously estimated; calculating a central position of the spot based on the bounding box; calculating a relative position of a central distance between spots in a direction along the base substance, and a spot; judging whether or not this is the position of the estimation spot, and in the case where this is not the position of the estimation spot, performing positioning to amend the position of this estimation spot, and setting this position as the position of the spot.

An eighth aspect of the invention is an analysis processing method wherein analysis of the spot includes: calculating a relative position between a position of a spot on the base substance, and a position on a microplate on which wells are arranged in matrix form on a plane; and associating the position of the spot on the base substance with the position on the microplate, and displaying this.

A ninth aspect of the invention is an analysis processing method wherein specifying the spot includes: calculating a first order difference value of read image data; recognizing a point where a sign of the first order difference value changes, as a position of a spot; setting a position of a previously estimated estimation spot, and comparing the position of this estimation spot with the position of the recognized spot; and of the recognized spots, making another spot excluding a spot displaced by a set spacing amount from the position of the estimation spot, a recognition position of the spot. Here the set spacing amount is made an spacing deviation of an average amount of from the position of the estimation spot to the estimation spot adjacent to this. Calculation of the difference value is obtained based on a change or the like of the optical information of each of the partial regions constituting the spot.

A tenth aspect of the invention is an analysis processing method wherein specifying the spot includes: calculating a first order difference value of the read image data; recognizing a point where a sign of the first order difference value changes, as a position of a linear base substance on which the detection substances are arrayed in a predetermined spacing; setting a position of a previously estimated estimation base substance, and comparing the position of this estimation base substance with the position of the recognized base substance; and of the recognized base substance positions, making the positions of a drawn out base substance excluding the spot displaced by a set spacing amount from the position of the estimation base substance, the recognized base substance position. Here the set spacing amount is made a spacing deviation of an average amount of from the position of the estimation base substance to the estimation base substance adjacent to this. Furthermore, the first order difference value of the image data is calculated for a direction orthogonal to the base substance.

An eleventh aspect of the invention is an analysis processing method wherein specifying the spot includes: calculating a second order difference value of the read image data; and recognizing a position where a sign of this second order difference value changes, as a start or finish position of a range of a spot.

A twelfth aspect of the invention is an analysis processing method wherein, detecting the partial region is performed by detecting a partial region of respective spots by a line scan, for the image data, and specifying the spot includes; performing setting of an inspection box which encloses the partial region or all regions of the spot; setting a bounding box for where the inspection box is enlarged until it contains the spot; and searching for a central position of the spot based on this bounding box; scanning the wound body in a direction orthogonal to the winding direction of the base substance, and obtaining a position of the base substance; comparing a previously estimated position of the base substance with the obtained position of the base substance; correcting the recognized position of the estimation base substance, and determining the base substance position; recognizing a point where a sign of a first order difference value of image data along the determined base substance position changes, as a central position of a spot, and specifying the spot position.

A thirteenth aspect of the invention is an analysis processing method wherein determination of the base substance position includes: further comparing the corrected recognition position of the estimation base substance with a central position of the searched spot; and performing correction of the recognition position of the estimation base substance.

A fourteenth aspect of the present invention is an analysis processing method wherein specifying the position of the spot is performed by: comparing the position of a previously estimated estimation spot with a central position of a spot recognized from the first order difference value; correcting the recognized position of the estimation spot; and again comparing the corrected estimation spot position with a central position of the searched spot, and correcting the recognition position of the estimation spot.

A fifteenth aspect of the invention is an analysis processing device that performs analysis based on optical information from a wound body on which is wound a linear base substance on which a plurality of spots on which biological substances of previously determined types are immobilized, are arranged at previously determined positions, comprising: an optical information measuring device that scans a surface of the wound body and obtains image data; a partial region detection device that, for the image data obtained by scanning the surface of the wound body, detects a partial region belonging to the respective spots by line scanning; a spot specifying device that specifies respective spots belonging thereto, based on the partial region of the detected respective spots; and an analysis device that performs analysis of the spots based on the specified respective spots.

A sixteenth aspect of the invention is an analysis processing device wherein, the spot specifying device specifies by performing setting of an inspection box which encloses a part or all of the spots, and in a case where all regions of the spots are not contained inside the inspection box, enlarges the inspection box, and the analysis device, for the specified spots, separates into a case where the size of the inspection box does not satisfy a predetermined set value, and a case where this is above the set value, and judges the spot to be valid or invalid, and also analyzes the optical information from the spots.

A seventeenth aspect of the invention is an analysis processing device wherein the partial region detection device has an image data binarizing section that binarizes the read image data, and the spot specifying device has a spot recognizing section that sets a bounding box for which the inspection box is enlarged until it contains the spot, and judges a center or a size of the spot based on the bounding box.

An eighteenth aspect of the invention is an analysis processing device wherein the analysis device has a correlation recognizing section that calculates a correlation between a position of a spot on the base substance, and a position on a microplate arranged in matrix form on a plane; and associates the position of the spot on the base substance with the position on the microplate, and displays this.

A nineteenth aspect of the invention is an analysis processing device wherein the spot specifying device has: a difference value calculating section that calculates a first order difference value and a second order difference value of the read image data; and a spot position recognizing section that recognizes a point where a sign of this first order difference value changes, as a position of a spot, compares a position of a previously estimated estimation spot with the position of the recognized spot, and makes another spot excluding a spot displaced by a set spacing amount from the position of the estimation spot, a recognition position of the spot, and recognizes a position where a sign of the second order difference value changes, as a start or finish position of a range of a spot.

A twentieth aspect of the invention is an analysis processing device, wherein the spot specifying device has: a spot search section that; performs setting of an inspection box to enclose a part or all of the spots, sets a bounding box for which the inspection box is enlarged until it contains the spot, and searches the center of the spot based on the bounding box; and a spot position recognizing section that; scans the wound body in a direction orthogonal to the winding direction of the base substance, and obtains a position of the base substance, compares a previously estimated position of the estimation base substance with the obtained position of the base substance, corrects the recognized position of the estimation base substance and determines the base substance position, recognizes a point where a sign of a first order difference value of image data along this base substance position changes, as a central position of a spot, compares a previously estimated position of an estimation spot with a central position of the recognized spot, and corrects the recognition position of the estimation spot, and specifies the spot position.

### [Effects of the Invention]

According to the first aspect of the invention, when one spot is specified, the partial region of the spot is detected, and the spot is specified based on this. Therefore it is not necessary to scan the size of the spot or the shape of the base substance or the winding position altogether, and highly accurate analysis can be performed without scanning the spot and taking an accurate size. Hence there is the effect that highly accurate analysis results can be obtained efficiently for objects for which the position is uncertain.

According to the second aspect of the invention, there is the effect that using the wound body wound with the linear base substance, makes it possible to analyze with a simple control.

According to the third aspect of the invention, there is the effect that recognition of a spot for which the position has not been specified, is accurately and efficiently performed.

According to the fourth aspect of the invention, there is the effect that the size and the central position of the spot is obtained simply and accurately.

According to the fifth aspect of the invention, there is the effect that determination of the marker is performed accurately, and specifying the position of the detection substance is performed clearly, thus contributing to image analysis.

Accordingly the sixth aspect of the invention, there is the effect that correction of the base substance (in the direction perpendicular to the direction of the base substance) is favorably performed.

According to the seventh aspect of the invention, there is the effect that correction of the position of the spot (in the base substance direction) is favorably performed.

According to the eighth aspect of the invention, there is the effect that the position of the spot on the base substance is represented by associating with the position on the microplate, and hence the image analysis results are standardized, and ascertaining the image analysis results can be easily performed.

According to the ninth aspect of the invention, there is the effect that even in the case where the background of the spot is different, recognition of the spot is accurately and efficiently performed. Furthermore, the central position of the spot is easily and accurately obtained.

According to the tenth aspect of the invention, there is the effect that even in the case where the background of the base substance is different, recognition of the base substance is accurately and easily performed.

According to the eleventh aspect of the invention, there is the effect that the width (size) of the spot is easily and accurately obtained.

According to the twelfth aspect of the invention, there is the effect that the position of the base substance is accurately obtained, and hence determination of the spot position is precisely performed, and analysis of the image data is favorably performed.

According to the thirteenth aspect of the invention, there is the effect that the position of the base substance is even more precisely determined.

According to the fourteenth aspect of the invention, there is the effect that specifying the position of the spot is accurately performed and highly reliable spot positioning is performed.

According to the fifteenth aspect of the invention, there is the effect that in the case of specifying one spot, the partial region of the spot is detected, and the spot is specified based on this. Therefore it is not necessary to scan all together for the size of the spot, or the shape of the base substance, or the winding position, and highly accurate analysis is performed without scrutinizing the spot and taking an accurate size, and for an object for which the position is uncertain, an analysis result of a high accuracy can be obtained efficiently. Furthermore, using the wound body which is wound with the linear base substance, there is the effect that analysis can be possible with a simple control.

According to the sixteenth and seventeenth aspects of the invention, there is the effect that recognition of spots for which the position has not been specified, can be accurately and efficiently performed. Furthermore, the size and the central position of the spot can be obtained easily and accurately.

According to the eighteenth aspect of the invention, there is also the effect that the image analysis results are standardized, and ascertaining the image analysis results can be easily performed.

According to the nineteenth aspect of the invention, there is the effect that even in the case where the background of the spot is different, recognition of the spot is accurately and efficiently performed. Furthermore, the central position and size of the spot is easily and accurately obtained.

According to the twentieth aspect of the invention, there is the effect that the position of the base substance is accurately obtained, and hence determination of the spot position is precisely performed, and analysis of the image data is favorably performed.

### [Brief Description of the Drawings]

[FIG. 1] is a block diagram showing a software configuration for an image analysis processing device according to an embodiment of the present invention.
[FIG. 2] is a block diagram showing of a software configuration for an image analysis processing device according to the embodiment.
[FIG. 3] is a first flow chart according to an analysis processing method of the image analysis processing device according the first embodiment.
[FIG. 4] is second flow chart according to the analysis processing method of the image analysis processing device according to the first embodiment.
[FIG. 5] is an explanatory diagram of a spot recognition method according to an embodiment, wherein (1) is a view showing a condition of line scanning from the top right, (2) is a diagram showing a condition of creating an inspection box surrounding a hit pixel, (3) is a diagram showing a condition where the inspection box is expanded in a direction where there is a fluorescent pixel, and (4) is a diagram showing a condition including a pixel which shows a region enclosing a spot.
[FIG. 6] is a diagram (left view) showing image data of strands and spots received by a receiving section, and a diagram (right view) showing a microplate image plane, according to the embodiment.
[FIG.7] is a display form view (left view) showing an image of a strand, and a view (right view) showing a microplate image plane, according to the embodiment.
[FIG. 8] (a) is a view showing recognition spots as a result of image analysis processing, and (b) is a view showing a position of spots in a wound body.
[FIG. 9] is graph illustrating SNPs determination according to the embodiment.
[FIG. 10] is a block diagram showing a software configuration of an image analysis processing device according to a second embodiment of the present invention.
[FIG. 11] is a first flow chart according to an analysis processing method of the image analysis processing device according the second embodiment.
[FIG. 12] is second flow chart according to the analysis processing method of the image analysis processing device according to the second embodiment.
[FIG. 13] is a diagram showing a line chart and a microplate image plane, showing brightness in the strand direction, according to the embodiment.
[FIG. 14] is a block diagram showing a software configuration of an image analysis processing device according to a third embodiment of the present invention.
[FIG. 15] is a first flow chart according to an analysis processing method of the image analysis processing device according the third embodiment.
[FIG. 16] is second flow chart according to the analysis processing method of the image analysis processing device according to the third embodiment.
[FIG. 17] is third flow chart according to the analysis processing method of the image analysis processing device according to the third embodiment.
[FIG. 18] is a diagram showing a wound body wound with a filamentous strand serving as a base member.
[FIG. 19] is a diagram showing a wound body wound with a strand, and a microplate.
[FIG. 20] (a) is a diagram showing an integrated wound body with a strand wound and supported on the surface of a cylindrical core, and (b) is a diagram showing a device for containing, reacting, and measuring.
[FIG. 21] (a) is a diagram showing positional relationship between a pipette section, an illumination section, and a light receiving section, in a scanner unit, and (b) is a diagram in which measurement results in respective immobilizing positions are displayed on a plane.
[FIG. 22] is a graph showing picture images for low sensitivity PMT, high sensitivity PMT, and a combination of these, and sensitivity behavior.

### [Best Mode for Carrying Out the Invention]

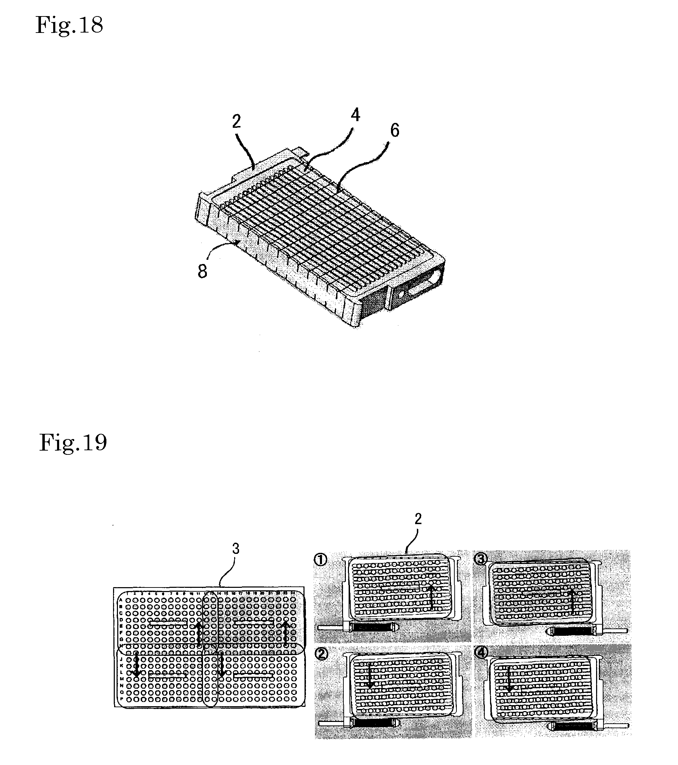

Hereunder is a detailed description of an analysis processing method and device according to an embodiment of the present invention based on the drawings.
Conventionally, a solution containing various types of specimen for spotting is contained in an international standard 96 hole microplate (9 mm pitch), a 384 hole microplate (4.5 mm pitch) or a 1536 hole microplate (2.25 mm pitch). Then a pin is inserted into the wells of these and the stored solution is attached, and this is transferred to and arranged on a temporary wound body for arraying specimens. That is to say, as shown in FIG. 18, a temporary wound body 2 is wound with a strand 4 (base substance) at a winding spacing for rows corresponding to a predetermined matrix, and at the predetermined spacing, a detection substance 6 (a plurality of detection specimens) is attached and fixed.

As shown in FIG. 19, the temporary wound body 2 is made up by images of a total of four surfaces of two front surfaces (1) and (2), and two rear surfaces (3) (4). Furthermore, on each of the surfaces, 96 (12 × 8) spot positions are provided, so that a total of 384 (96 × 4) spot positions are formed. These correspond to the respective spot positions of a microplate 3.

In the aforementioned fixing, an attachment tool is used. This attachment tool is formed in a shallow box shape with an upper side of a main frame open, and on a lower side of the main frame is arranged a plurality of retention ends (for example 384/4) of pin support form that protrude downwards, arranged in matrix form (12 rows by 8 columns). On these retention ends is held a predetermined detection substances, and these are attached and immobilized on the strand 4 of the temporary wound body 2. Furthermore, on the strand 4 of the sites on the side face of the temporary wound body 2 is attached and fixed a marker 8 made from a fluorescent substance serving as identification.

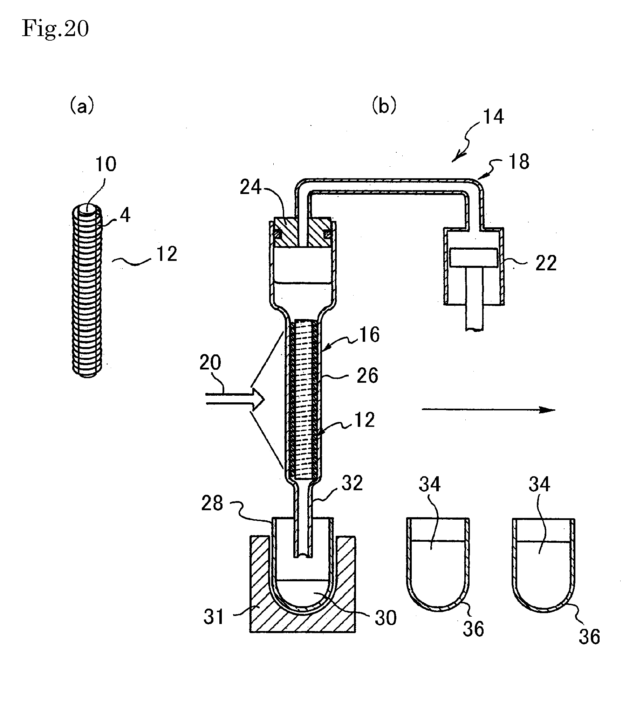

FIG. 20 (a) shows an integrated wound body 12 with the strand 4 integrally wound and supported on the surface of a cylindrical shape core 10. The diameter of the core 10 is for example from approximately 2 mm to approximately 4 mm, the thickness of the strand 4 is from approximately 0.05 mm to approximately 0.2 mm, and the length of the strand 4 is for example from approximately 500 mm to approximately 3000 mm.

The integrated wound body 12 is one which is wound by transferring the strand 4 wound on the temporary wound body 2. In the integrated body 12, the filamentous strand 4 that is wound at a winding spacing for rows of the aforementioned matrix on the temporary wound body 2, is wound up at a narrower spacing than the winding spacing, to thereby perform integration of the array of the strand 4. The core 10 is formed for example from plastics such as polycarbonate, polyvinyl acetate, polyethylene, or from a metal or the like. Preferably on the surface of the core 10 there is formed micro grooves that guide the winding of the strand 4.

FIG. 20 (b) illustrates a containing, reacting, and measuring device 14, and a containing, reacting, and measuring method. The containing, reacting, and measuring device 14 has a pipette section 16 serving as a containing section for the integrated wound body 12, a drawing and discharging section 18 for performing drawing and discharging with respect to the pipette section 16, and a below-mentioned scanner unit 20 provided on the outside of the pipette section 16. On the drawing and discharging section 18 there is provided a cylinder 22, and a nozzle section 24 that communicates with the cylinder 22 through a pipe.

Using the containing, reacting, and measuring device 14, the target substance is analyzed and the base sequence determined. In the measurement method according to this containing and reacting, a target substance comprising a DNA fragment for which a previously unknown base sequence is to be determined, is stored in a solution 30 in which a substance labeled with fluorescence is suspended, inside a container 28. Furthermore, inside a large diameter section 26 of the pipette section 16 serving as the storage section, is stored the integrated wound body 12 with the core 10 wound with the strand 4 with various kinds of known oligonucleotides with their base sequences associated with their respective immobilizing positions.

Furthermore, the pipette section 16 is fitted to the nozzle section 24, and a small diameter section 32 of the pipette section 16 is inserted inside the container 28, and by means of the drawing and discharging section, the solution 30 inside the container is drawn up until the integrated wound body 12 is immersed therein, and is subsequently discharged, and this operation is repeated several times. As a result, the DNA in the solution is attached to the detection substance of the integrated wound body 12.

Next, in a constant temperature tank 31 provided with a Peltier element, a probe solution in which a predetermined reagent is mixed with a liquid which suspends the target substance which is labeled with a fluorescent material or the like, is adjusted to a form where this can be easily hybridized. Furthermore, the small diameter section 32 of the pipette section 16 is moved to the container 28 and inserted therein, and the container 28 is subjected to incubation in the constant temperature tank 31 for several minutes to several hours to cause reaction. After completion of the reaction, at room temperature, the small diameter section 32 is inserted into a container 36 in which is stored a washing liquid 34, and shaking is applied to wash this and remove probe solution in which extraneous target substance and the like is suspended. Then, the integrated wound body 12 for which washing has been completed is scanned by the scanner unit 20 and measured.

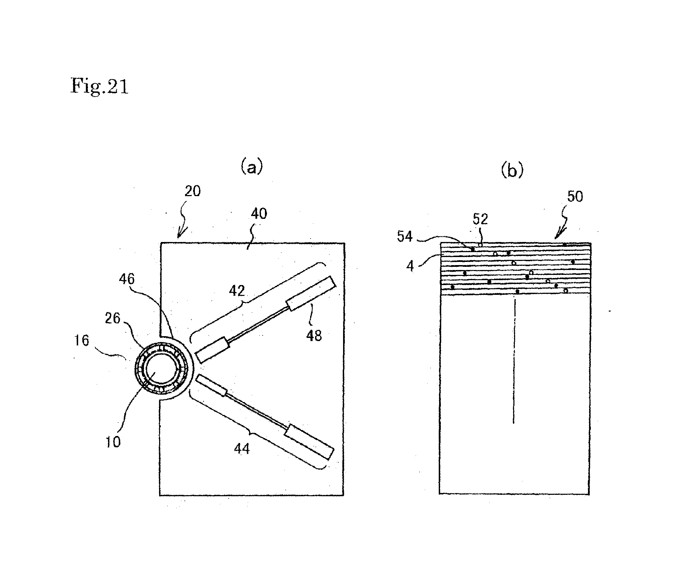

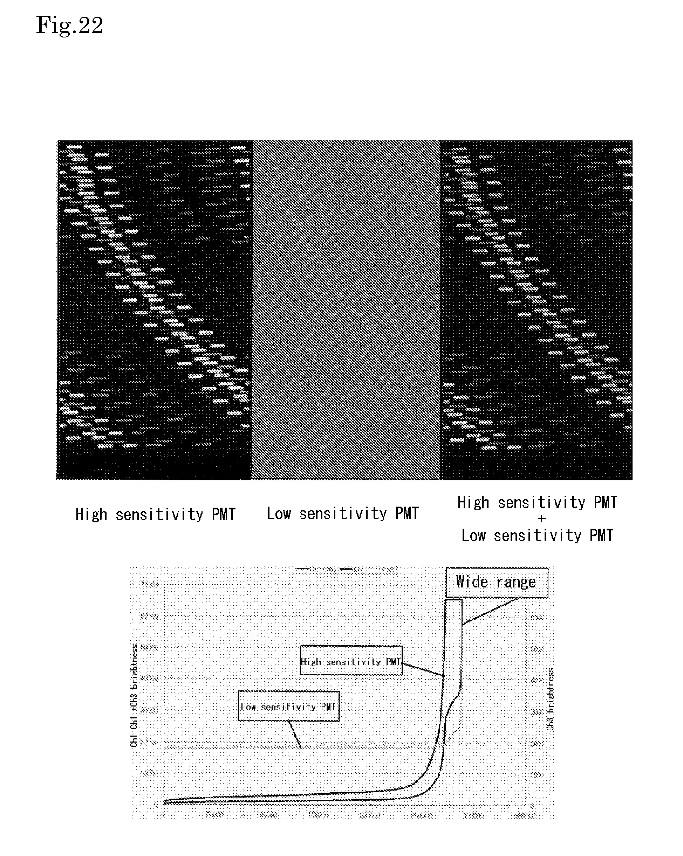

The scanner unit 20, as shown in FIG. 21, has a measuring instrument mainframe 40, an irradiation section 42, and a light receiving section 44. In FIG. 20 (a) the positional relationship between the pipette section 16 related to containing and reacting, and the irradiation section 42 and the light receiving section 44 of the measuring instrument mainframe 40 is shown. In the case where a highly sensitive scanner is used as the scanner used here, then as shown in FIG. 22, by combining the data from a PMT (photomultiplier) on the low sensitivity side with the data from a PMT on the high sensitivity side, a wide range sensitivity (having a sensitivity of both of the high sensitivity and the low sensitivity) is obtained, and one set of data with a spread dynamic range can be produced.

For the pipette section 16, translation motion is possible along the X axis, the Y axis and the Z axis directions, with respect to the measuring instrument mainframe 40. When performing measurement, the side face of the integrated wound body 12 which is stored in the large diameter section 26, is positioned by the translation motion in a semicircular pillar shape recess 46 of the measuring instrument mainframe 40 where the tip ends of the irradiation section 42 and the light receiving section 44 are arranged.

In the containing, reacting, and measuring, a laser device 48 that outputs a linear beam having a line along the transverse direction along the axial direction of the large diameter section 26 of the pipette section 16 is used as the illumination section 42. The laser beam irradiated from the laser device 48 passes through a filter for blocking wavelengths other than of the necessary excitation light for exciting the fluorescent material. The light generated by the irradiated laser light and containing fluorescence of a line form having a predetermined length in the transverse direction, is received by the light receiving section 44.

Next, by rotating the nozzle section 24, the respective immobilizing positions and the qualitative and quantitative information of these immobilizing positions can be obtained. The measurement results are not displayed on a plane, but for example become an image 50 as shown in FIG. 21 (b). By measuring the light emission position in the image 50, the structure and the like of the target substance can be analyzed. Here reference symbol 54 denotes spot lights due to fluorescence of the multiple types of detection substances 6 which are immobilized on the integrated wound member. Reference symbol 52 denotes spot lights due to fluorescence of a marker 8 due to an emission substance or the like, which is used for recognizing the immobilizing position.

In this manner, regarding the temporary wound body 2, since this is constructed by winding a flexible fibrous base substance, the respective spot positions in the wound condition are positionally displaced due to winding and aspects of the winding, so that there is an uncertainty factor with variations due to the form of the core or the base substance, the quality or the magnitude of the resilience, and the like, and it is necessary to consider these uncertain elements, to recognize the position of the respective spots. Therefore, hereunder is a description of the analysis process for an object for which the position is uncertain.

At first is a description of the analysis processing method and device according to a first embodiment.

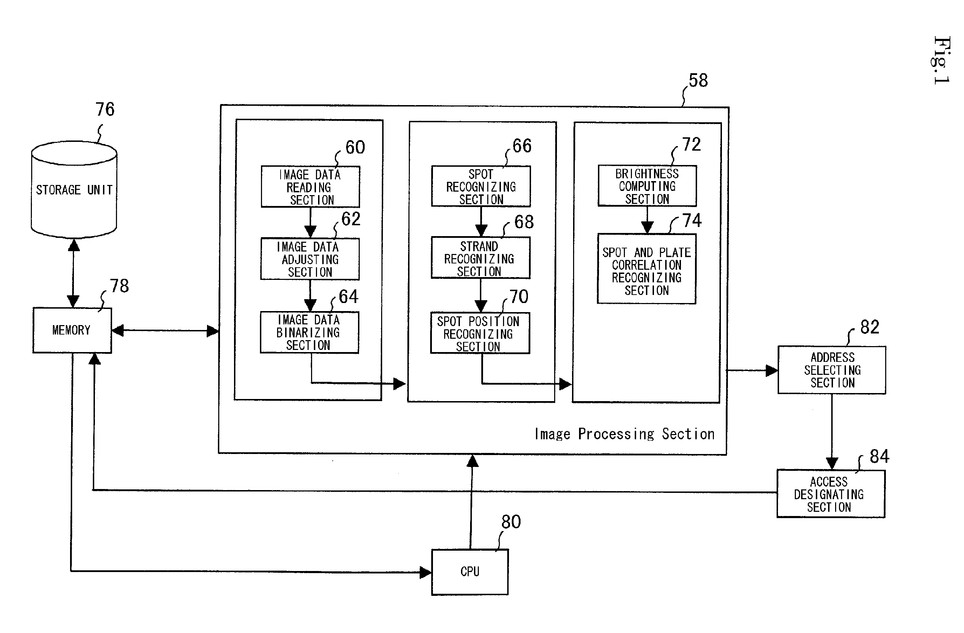

FIG. 1 shows the analysis processing device. This analysis processing device comprises; an image processing section 58 comprising a program, and a storage unit 76, a memory 78, a CPU 80, an address selecting section 82, and an access designating section 84. The software of the image processing section 58, as shown in FIG. 1 comprises; an image data reading section 60, an image data adjusting section 62, an image data binarizing section 64, a spot recognizing section 66, a strand recognizing section 68, a spot position recognizing section 70, a brightness computing section 72, and a spot and microplate (plate) correlation recognizing section 74.

The software of the image processing section 58 is made in modules for each of the processing sections, and adopts a form which is highly flexible and extendable (version upgrade). Furthermore regarding; the setting value of the inspection box for specifying the type of spot, the position of the estimation strand, and the position of the estimation spot, and the like, these are parameterized, and parameters of such setting values and the like are constructed so as to be appropriately changeable.

The image data reading section 60 converts the image data which has been changed into an electrical signal by the scanner, into a digital signal by an AD converter, and reads this into a predetermined region of the memory 78. The image data adjusting section 62 adjusts the image brightness and maintains a favorable state when analyzing or viewing. The image data binarizing section 64, in order to recognize the spot 90 from the picture image, performs binarizing as pre-processing for differentiating the light and dark. The spot recognizing section 66 uses a below-mentioned inspection box 99 and performs differentiation between the spot 90 and noise, and determines the marker 8, or uses a bounding box 93 and determines the magnitude and the central position of the spot 90.

The strand recognizing section 68, in order to compute the correlation for the detection positions on the microplate 3, performs positioning while correcting for the direction perpendicular to the direction of the strand 4 (the filament to which the detection substance is fixed). In the spot position recognizing section 70, the position of the spot in the direction along the strand is computed, and this is amended and the position of the spot is recognized. The brightness computing section 72 sums up the brightnesses of the spots 90, and computes the average and displays this. The spot and the microplate (plate) correlation recognizing section 74 recognizes the relationship between the position of the spot and the detection position on the microplate 3 and displays this. The recognition results of the image data are shown as spots on the microplate image plane arranged in a matrix on a plane, to thereby give standardization of the display of the recognition results, and from this, determination of the result can be easily performed.

The storage unit 76 is an external storage unit such as a hard disc. Image data is read into the memory 78, and analysis and assay of the image data is performed. The CPU 80 is a central processing unit. It reads out data inside the memory 18 via the address selecting section 82 and the access designating section 84, and performs analysis processing and the like.

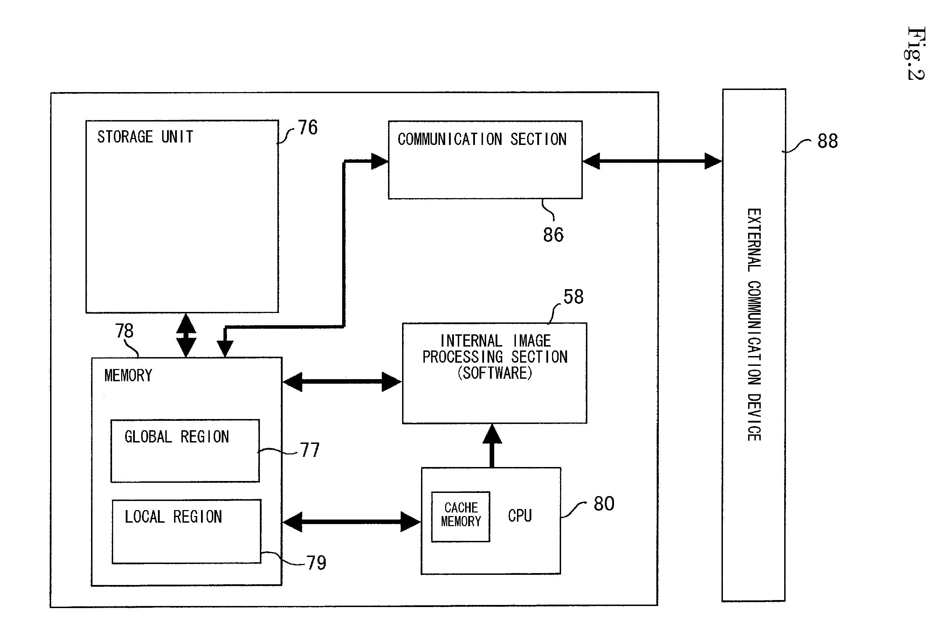

FIG. 2 shows a hardware configuration of an image analysis processing device. This image analysis processing device has, in addition to a CPU 80, a storage unit 76, and a memory 78 constituting a personal computer, a communication section 86 and an external communication device 88. The memory 78 is a main storage unit constructed by a RAM and the like, and is loaded with software for image analysis processing which serves as an internal image processing section 58. The memory 78 is divided into a global region 77 and a local region 79.

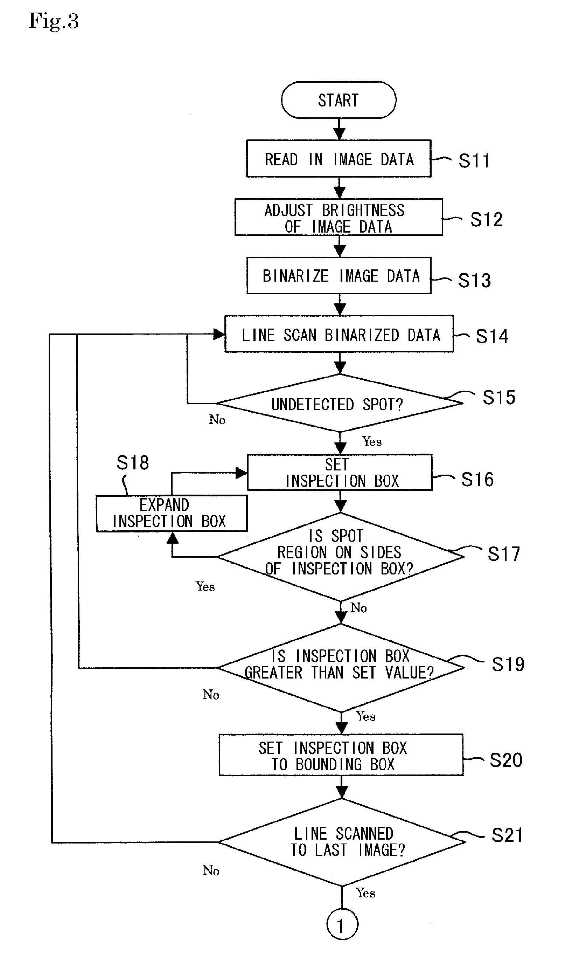

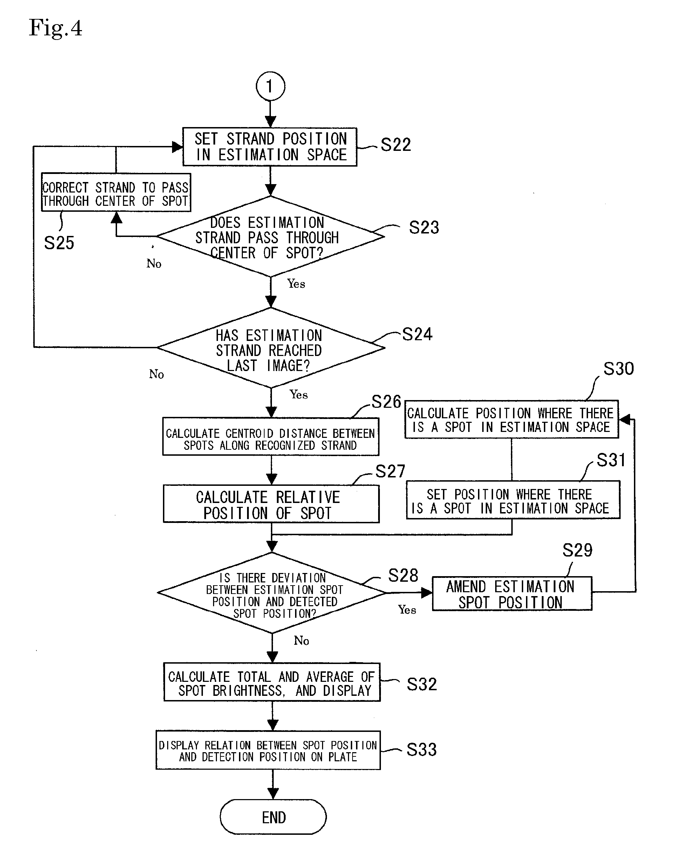

FIG. 3 and FIG. 4 show a program for image analysis processing that recognizes by image analysis and assay, the reaction results of an inspection specimen (detection substance) that has been arrayed on the integrated wound body 12. An overview of the processing here includes: recognizing a fluorescent part as a spot on the image data; computing a setting of an image feature quantity (area, bounding box, center); differentiating between a spot and a marker; making a determination and removing the noise; computing a correlation with the detection position on the microplate; calculating the brightness of the spot; and displaying the result. Furthermore, in this embodiment, the marker 8 is formed greater than the size of the detection substance 6 serving as the test sample. As a result, when analyzing and determining the spot, the spot due to the detection substance 6 is differentiated from that due to the marker 8 by the size of the spot. The marker 8 is one which displays a reference point which is labeled so that it becomes a reference for specifying the immobilizing position of the detection substance 6, and is arranged for each predetermined spacing.

Furthermore, in order to improve the recognition accuracy, known processing such as correction and amendment is performed. Therefore, using the image feature quality, recognition of the spot position and the like is performed. Furthermore, the distance between spots is calculated, and in the case where this distance is greater than a specified value, determination such as whether a spot which does not emit light is present therebetween is performed.

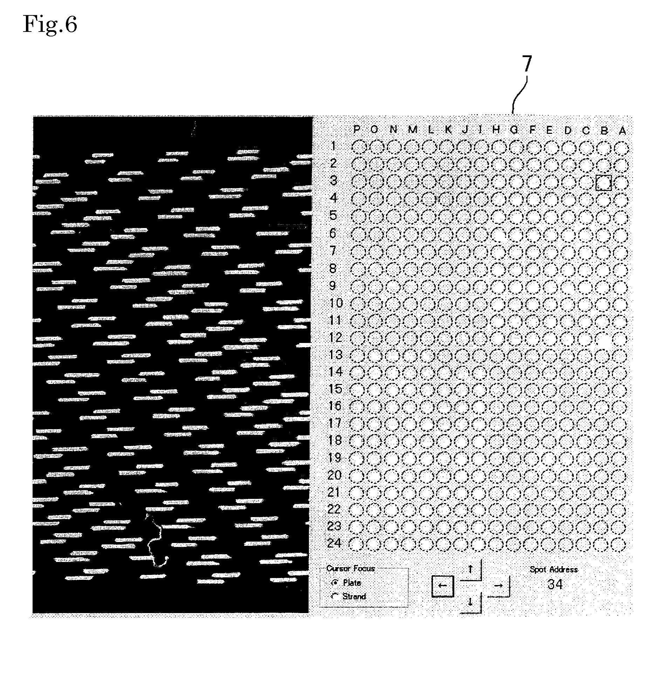

Here, is a description of the analysis and recognition processing of the image data, based on the flow chart.
At first, by means of the image data reading section 60, the image data related to the detection substance on the strand is read in from the scanner unit 20 (S11). Then, by means of the image data adjusting section 62, brightness adjustment of the image data is performed (S12). FIG. 6 shows image data of the strand (thread and spot) which is received by the light receiving section. By brightness adjustment, when the image data is displayed on the image plane this is made visible. Furthermore, the image data is color, and in order to analyze this, this is binarized into black and white data in the image data binarizing section 64 (S 13).

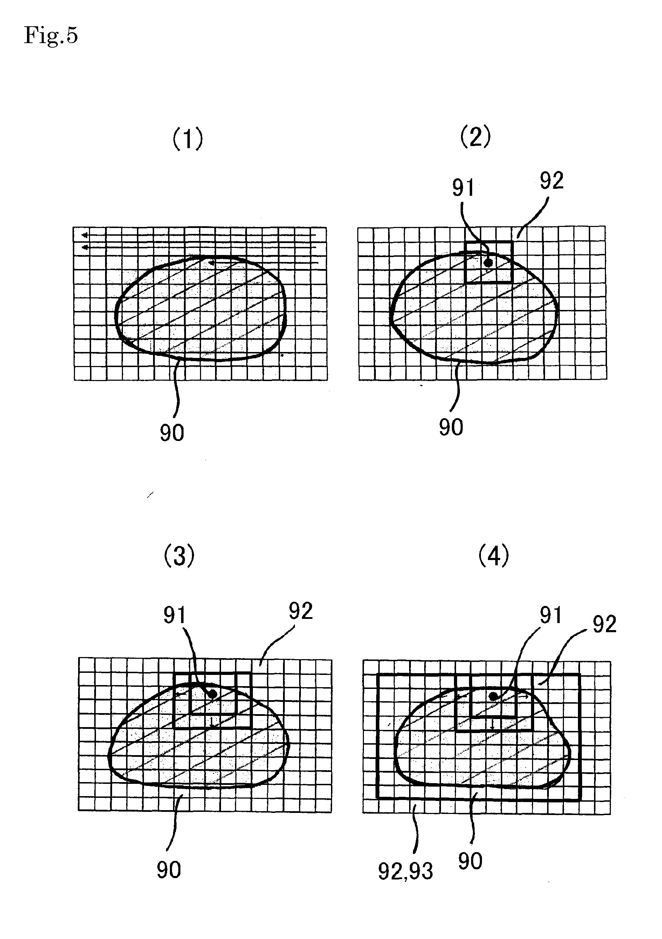

Then, as shown in FIG. 5 (1), a line scan of the binarized image data (scanning from the top right in the figure) is performed (S14). By means of this line scan, the sequential spot 90 is detected, and recognized, and it is determined whether or not this is an undetected spot (S15). If not, the processing returns to step (S14) and line scanning is continued. If this is an undetected spot, setting of an inspection box 92 of a rectangular shape or square shape that encloses the spot 90 is performed (S16). Furthermore, as shown below, differentiation of the spots 90 in the spot recognizing section 66, and recognizing the size and the position of the center, and the like is performed. The spot 90 comprises a plurality of continuous pixels 91 which are fluorescent. Here, when a pixel 91 at one part of the spot is detected by the line scan, then as shown in FIG. 5 (2), an inspection box 92 of a square shape of constant range is set with this pixel 91 at the center.

Furthermore, in the inspection box 92, of the four sides enclosing the pixel 91, the side in the direction in which the pixel 91 exists is moved in parallel by just a predetermined distance and expanded. That is to say, it is judged whether or not there is a spot region in the respective sides of the inspection box 92 (S 17), and if so, then as shown in FIG. 5 (3), further expansion of the inspection box 92 is performed (S 18). In the case where there is no spot region, the expansion is terminated, and it is determined if the inspection box 92 has a size of a predetermined set value or more which becomes the reference (S 19). From this result, in the case where the spot 90 does not satisfy the aforementioned set value, this spot is determined to be noise, and the processing returns to line scan (S 14).

When the inspection box 92 is greater than the set value, this is determined to be an effective box for the detection substance 6. Then, the inspection box 92 at this time is set and registered as the bounding box 93 (S20). This bounding box 93 is a region that encloses the perimeter of the spot as shown in FIG. 5 (4).

Consequently, the bounding box 93 is a box of a minimum size in which the spot is inscribed. Based on this bounding box 93, the size of the spot is determined, and also the center of the spot 90 is obtained. That is to say, the area of the bounding box 93 is determined to be the size of the spot 90, and also the center of the bounding box 93 is determined to be the center of the spot 90.

At this time, regarding the type of spots 90, this is determined based on the size (area) of the bounding box 93, and it is differentiated as to whether this is a spot 90 due to fluorescence of the detection substance 6, or is a spot 90 due to the fluorescence of the marker 8. In this embodiment, the market 8 is formed larger than the detection substance 6. Therefore by designating a set value (area) which becomes the reference for the size of the spot due to the marker 8 to be one that is larger than the spot due to the detection substance 6, it is possible to differentiate the spot due to the marker 8. Furthermore, in the case where the detected spot 90 is determined to be a marker, the attribute of the spot is registered to the effect that this is a marker 8. As a result, for example at the time of displaying the recognition result for the image data, the detection substance 6 and the marker 8 can be differentiated.

Furthermore, it is judged if the line scan has been completed to the last picture image (S21), and if part way, the processing returns to step (S14) of the line scan. The inspection box 92 and the bounding box 93 are here a rectangular shape, however these may be formed close to the shape of the spot, so that the processing can be further simplified. Consequently, these can adopt another form such as a circular form, a square form, a multi-angular form, and the like. However it is preferable to use one of a form which is close to the shape of the spot.

If the line scan has been completed to the end, calculation of the correlation between the position of the next spot and the microplate position is performed. This is in order to display the image processing results as a plane on an image of a microplate image plane 7 (spot position standardized) shown in FIG. 6.

This processing is performed in the strand recognizing section 68. Positioning is performed while compensating in the direction perpendicular to the direction of the strand 4 (strand). Here, at first, in order to set the estimation strand for which the position of the strand 4 has been previously estimated, the position of the estimation strand is set at an estimated spacing (S22). Then, it is judged if the estimation strand passes through the center of the spot 90 (S23). In the case where this deviates from the center, this is corrected so that the estimation strand passes through the center of the spot 90 (S25), and this is set as the position of the estimation strand (S22). In this case, it is not known whether there is something in the spot due to the detection substance 6, or something due to the marker 8. However since the marker 8 is set for each predetermined space, by making the marker 8 a reference, setting of the position is accurately performed.

In the case where the estimation strand passes through the center of the spot, this estimation strand is one for which the set position is defined, and the position of the strand is recognized. Then, it is determined if the processing of the estimation strand has reached the last picture image (S24), and in the case where this has not yet been reached, the processing returns to the step for setting the position of the estimation strand (S22). When the processing of the estimation strand has reached to the last picture image, amendment of the next spot 90 position is performed.

The amendment processing is performed in the spot position recognizing section 70, and the position of the spot is amended for the direction along the strand 4. At this time, the central position of the spot 90 is designated based on the central position of the bounding box 93. At first, the central distance between the spots 90 is calculated for the direction along the recognized strand 4 (S26), and furthermore the relative position of the spot 90 is calculated (S27). By calculating this central distance, it is recognized if a detection substance which does not emit light is present between the spots 90.

Then, the previously estimated estimation spot is set, and it is determined whether or not there is a deviation between the position of the estimation spot, and the position of the detected spot 90 (S28). This deviation is within a spacing of around half of the space between the normal estimation spots. In the case where there is the deviation, the position of the estimation spot is amended (S29), and association is performed between the position of the estimation spot, and the detected and recognized spot 90. Furthermore, a position where the presence of the spot is expected in the estimation spacing is calculated (S30), and a position where the spot is present in the estimation spacing is set (S31), and it is determined whether or not there is a deviation between the position of the re-estimation spot and the position of the detected spot 90 (S28). At this time, by making the spot due to the marker 8 a reference, calculation of the position, and setting can be accurately performed. If there is no deviation in the position of the estimation spot, then processing such as calculation and compensation for the position of the spot is ended.

In the case where there is no deviation (S28), the position of the estimation spot is defined, and the position of the spot is recognized. Next, by means of the brightness computing section 72, the total of the brightness of all the recognized spots, and the average, is calculated based on the image analysis results, and displayed (S32). The total of the brightness here is obtained by calculating the total of the area of the previously set bounding box. Furthermore, the calculation of the average is obtained by calculating the average brightness per one spot from the total of the brightnesses. Then, in the spot and microplate correlation recognizing section 74, correlation of the position of the spot 90, and the position of the detection substance on the microplate 3 is displayed (S33).

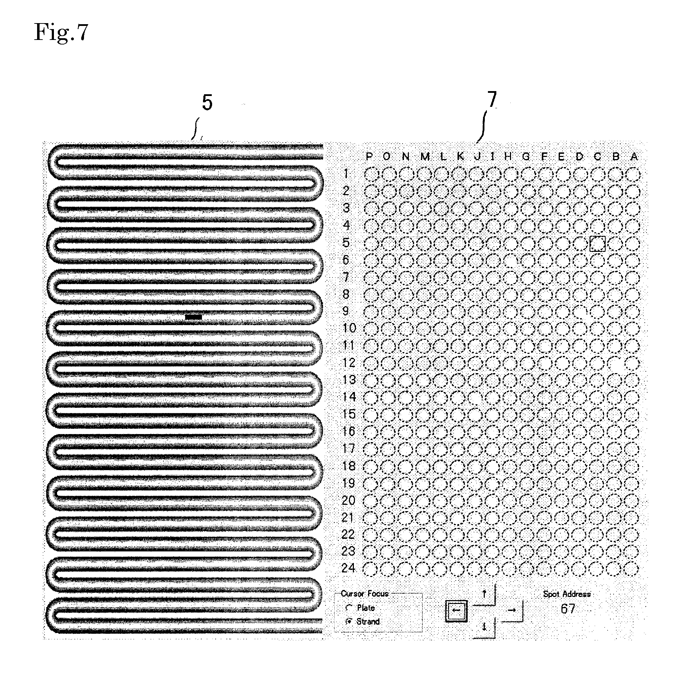

This, as shown in FIG. 6 (left view), displays the image analysis results as an image of the microplate image plane 7 serving as a plane surface on which the position of the spot is stabilized. At this time, as shown in FIG. 7, this may take a display form that expresses the linear image 5 of the strand. This linear display form is one where the detection substances are arrayed based on the predetermined prescribed contents. By associating this with the spot, this can be used for analysis or the like by visual observation.

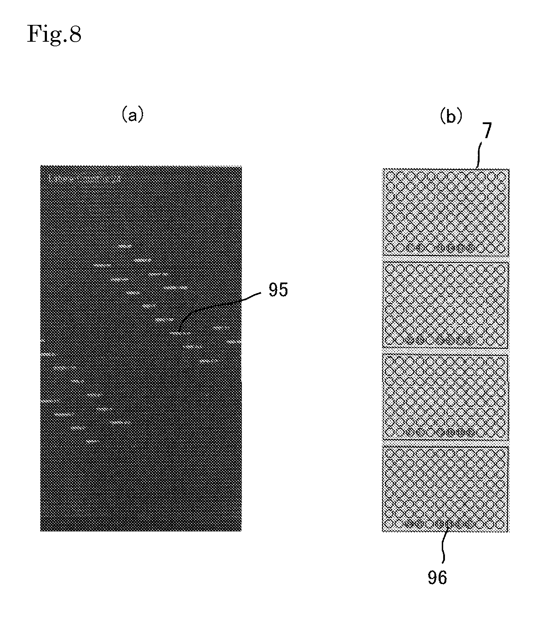

In this manner, the measurement results by the scanner unit 20 are input to the image data analysis processing device, and the analysis spot that emits fluorescence is judged and recognized, and the results are displayed on a display unit or are printed by a printer. Furthermore, in the image data, in order to simplify the localization of the light emitting portion and the non light emitting portion, then as shown in FIG. 8 (a), a predetermined number (for example serial number) is assigned to the recognized spot, and as shown on the microplate image plane 7 of FIG. 8 (b) corresponding to the recognized spots 95, a position 96 of the spot that corresponds to the temporary wound body 2 (the total of four surfaces of the two front surfaces and the two rear surfaces) is corresponded and assigned the same number. As a result, the recognition results of the picture image can be easily recognized, and determination of the inspection results is effectively performed.

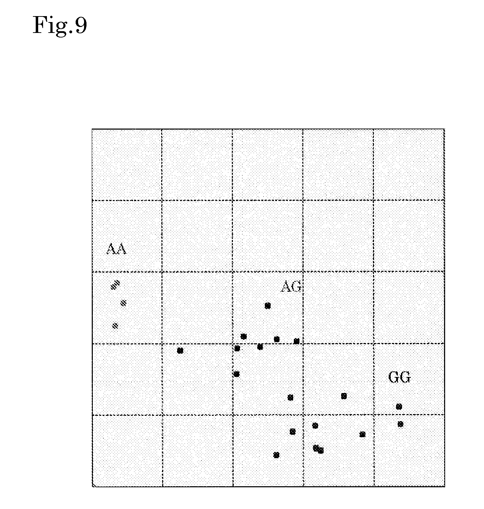

Furthermore, if the cursor function of the personal computer is used, and the cursor is matched with the spot on the microplate image plane 7 as shown in FIG. 8 (b), a conspicuous display (for example where the spot is enclosed in a red square) on the spot on the corresponding strand of FIG. 8 (a) is performed. As a result, the condition of the corresponding place is observed visually, and this contributes to the inspection. Furthermore, based on the inspection results, in the case where a genetic material DNA base (C) cytosine, (T) thymine, (A) adenine, and (G) guanine is used for the detection substance, then as shown in FIG. 9, the determination of the SNPs (single nucleotide polymorphisms) is performed. Here by copying the numerically converted data into a series of (C) block and (T) block, these are made into a scatter diagram, and determination of the group (GG), (AG), (AA) is automatically performed.

Consequently, according to the first embodiment, by using the inspection box, recognition of a spot for which the position is not specified can be accurately and efficiently performed. Furthermore, since the center and the size of the box is judged based on the bounding box, there is the effect that the size and the central position of the box is easily and accurately obtained. Moreover, since the inspection box is a rectangular shape, recognition of the spot is easily and effectively performed, and there is the effect that differentiation of spots of types with different sizes can be concurrently performed accurately and efficiently. Furthermore, correspondence is given to spots on the microplate which are arranged in matrix form on the plane surface, and the relationship between the position of the spot and the position on the microplate is recognized and displayed. Because of this, there is the effect that ascertaining the image analysis results is standardized and easily performed.

Next, is a description of the analysis processing method and device according to a second embodiment.

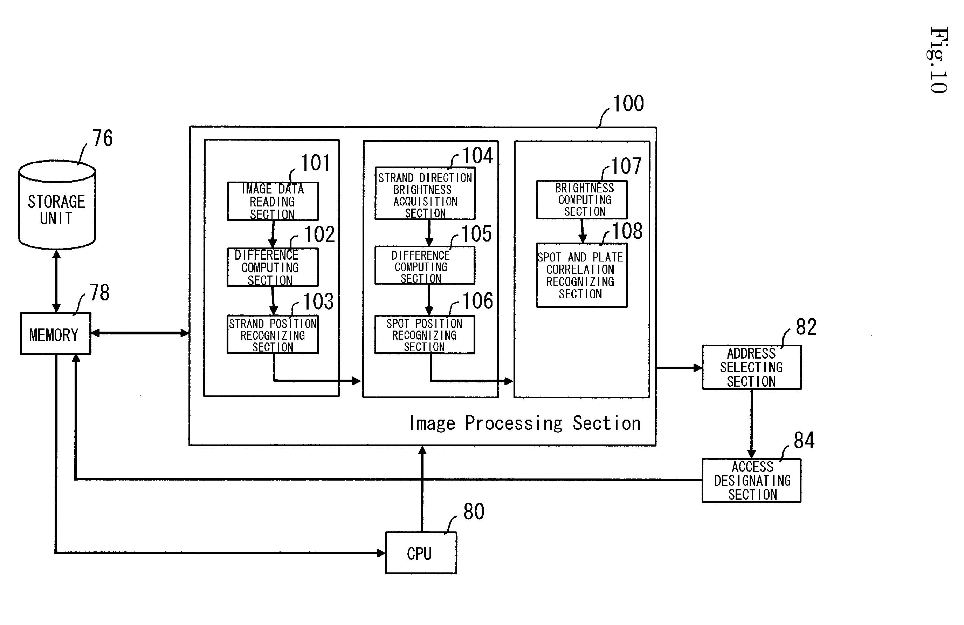

FIG. 10 shows the analysis processing device. This analysis processing device comprises; an image processing section 100 comprising a program, and a storage unit 76, a memory 78, a CPU 80, an address selecting section 82, and an access designating section 84. The software of the image processing section 100, as shown in FIG. 10 comprises; an image data reading section 101, a difference computing section 102, a strand position recognizing section 103, a strand direction brightness acquisition section 104, a difference computing section 105, a spot position recognizing section 106, a brightness computing section 107, and a spot and microplate (plate) correlation recognizing section 108.

The software of the image processing section 100 is made in modules for each of the processing sections, and adopts a form which is highly flexible and extendable (version upgrade). The image data reading section 101 converts the image data which has been changed into an electrical signal by the scanner, into a digital signal by an AD converter, and reads this into a predetermined region of the memory 78. The difference computing section 102 makes the image data (the respective pixels comprising an increased number of pixels each quantized and with the brightness digitally displayed) a first order difference (differential). The strand position recognizing section 103 recognizes the position of the strand 4 based on the difference value of the first order difference. The strand 4 and the spot 90 have different brightnesses, however, here a method is adopted for recognizing these based on the first order difference value and the second order difference value (derivative), and there is no interference with the recognition provided that a difference occurs between the background and the brightness.

The strand direction brightness acquisition section 104 acquires the brightness information based on the recognized strand 4. The difference computing section 105 performs first order differentiation and second order differentiation on the image data. The spot position recognizing section 106 recognizes the position of the spot based on the difference value of the first order difference and the second order difference. The brightness computing section 107 calculates and displays the mean brightness of the spot portion with respect to the background. The spot and microplate correlation recognizing section 108, based on the image analysis results, recognizes and displays the correlation between the position of the spot 90 and the position of the detection substance on the microplate 3. The hardware structure of the image analysis processing device is the same as the structure shown in FIG. 2.

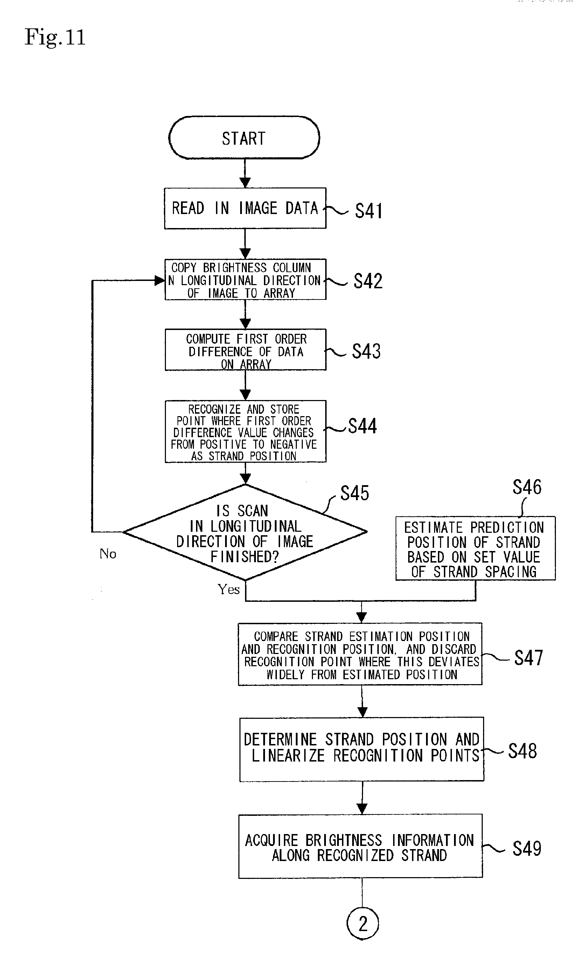

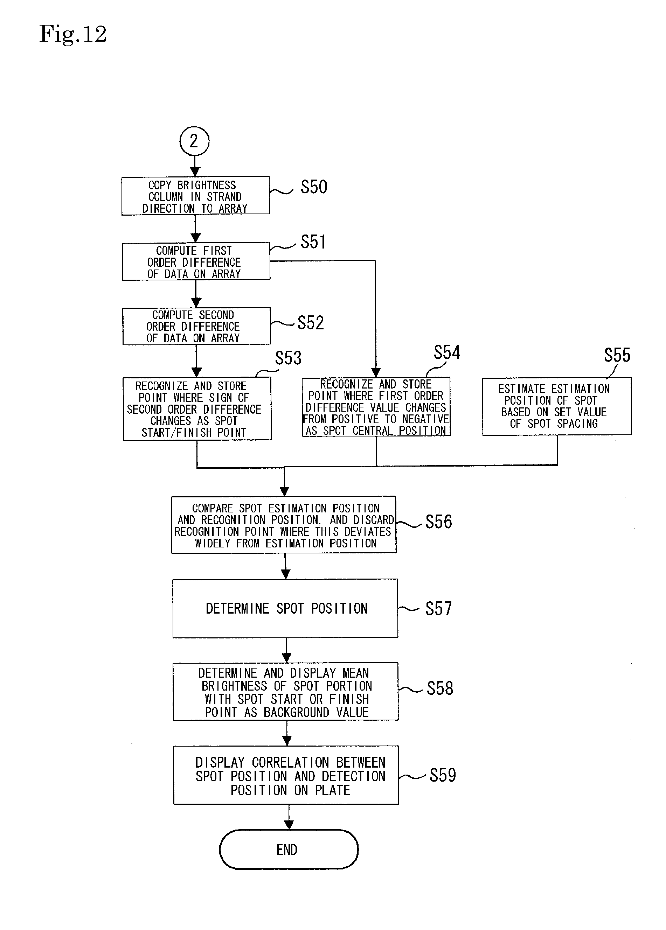

Here, is a description of analysis and recognition processing of the image data, based on the flow chart shown in FIG. 11 and FIG. 12. First, the image data reading section 101 reads in the image data related to the strand 4 and to the detection substance on this strand, from the scanner unit 20 (S41). Regarding this image data, the brightness wherein the respective pixels comprising the plurality of pixels are respectively quantized is digitally displayed. Furthermore, the brightness column in the longitudinal direction of the image in the image data is copied to a region of the longitudinal array (S42). The image data is taken in by the scan in the transverse direction (direction of the strand). However here image data is arranged in the longitudinal direction orthogonal to the direction of the strand 4, and this is searched to recognize the image.

Next in the difference computing section 102, the first order difference of the image data on the array is computed (S43). With this first order difference, the difference value for the image data that has been quantized and arrayed is computed. At this time, in the case where the brightness increases, the first order difference value shows a positive, and in the case where the brightness decreases, the first order difference value shows a negative. Furthermore, the point where the sign of the first order difference value changes from positive to negative is recognized as the position of the strand 4 (a point on the strand), and this is stored (S44). At the approximate center of a strand 4 having a predetermined thickness, the brightness changes (from light to dark). Therefore at this position, the difference value changes from positive to negative.

The recognition of the image data is performed by separating the image data into a plurality of block units. Then, it is determined if the scanning in the transverse direction of the image has been completed (recognition of the image data for all of the blocks complete) (S45), and when not completed, the image data of the next block from the read in image data is read in, and the processing returns to step S42.

When all have been completed, then next, in the strand position recognizing section 103, a reassessment amendment is performed on the position of the stored strand 4. At first, based on the set value for the spacing of the previously determined estimation strand, the estimation position of the strand is estimated as a guide (S46). Then, the position of the estimation strand, and the recognition position of the stored strand 4 are compared, and in the case where the recognition point of the recognized strand (the aggregate of the recognition points of the strand) and the position of the estimation strand deviate widely, this recognition point is discarded (S47). Here, the position that deviates widely corresponds to a position, or close to a position, where the recognized strand is separated by approximately half of the space from the position of the estimation strand to the estimation strand adjacent to this. The widely deviated recognition point is considered to be one due to deposits of dirt or the like. Furthermore, at this time, the position of the estimation strand is amended, and association is performed to the position of the recognized strand.

Then, the position of the strand is determined, the discarded recognition points are removed, and the recognized strand is amended and linearized (S48). This linearization is performed by tying the other recognition points excluding than the discarded recognition points, and recognizing and forming a straight line strand. Furthermore, in the strand direction brightness acquisition section 104, the brightness information along the recognized strand is acquired (S49). This brightness information is data which is scanned within a region of the thickness width of the strand. Furthermore, the brightness for the line of the center of the strand, and the line within the width of the strand, is averaged, and an average brightness is obtained.

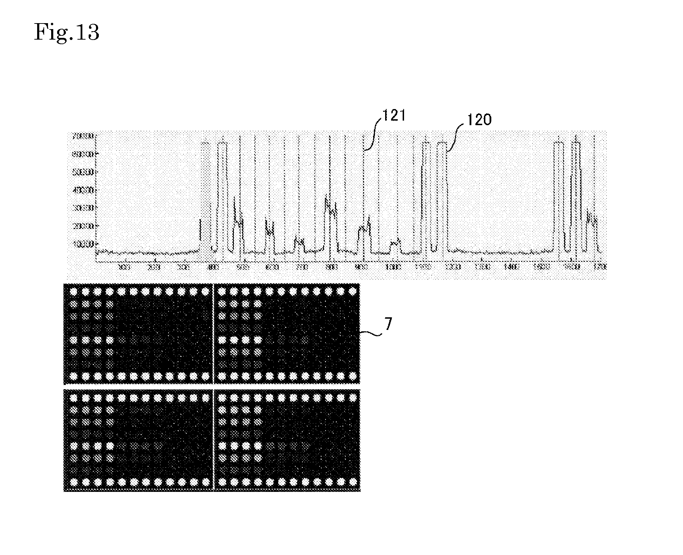

The brightness information is provided for creating a line chart of the brightness in the strand direction for when the strand 4 is released and extended in a straight line. In this line chart, as shown in FIG. 13, the respective peaks of the plot 120 correspond to the spots. Moreover, also for the parts where there is no peak, the positions can be extrapolated, and the brightness read out. Furthermore, the broken lines 121 of this line chart are positioned at the center of the peaks where the image processing portion is extrapolated. For example for a spot or the like due to adhered dust, it is possible to exclude this from the read in range (the range for the peaks of the plot), and make an amendment. At this time, the amendment result is reflected in the display (the position of the corresponding spot) on the microplate image plane 7 in real time, and repair efficiency is achieved.

Next, recognition of the spot 90 is performed for the image data. Here, in the read in image step (S41), the brightness line in the direction of the strand is copied to the region of the transverse line (the same direction as the scan) (S50). Then, in the difference computing section 105, the first order difference of the data on the array is computed (S51). At this time, the point where the sign of the first order difference value changes from positive to negative is recognized as the central position of the spot 90, and this is stored (S54). Furthermore, the second order difference of the data on the array is computed (S52). In the second order difference, at the portion where the brightness changes, the sign serving as the difference value changes. Here, the point where the sign of the second order difference value changes is recognized as the start point or the finish point for the range of the size of the spot of the spot 90, and this is stored (S53). At this time, the range of the largest spot within those recognized for one spot is made the diameter of the spot. As a result, both ends of the diameter of the spot 90 can be recognized, and also the size of the spot 90 can be recognized.

Next, in the spot position recognizing section 106, a reassessment amendment is performed on the position of the stored spot 90. At first, based on the set value for the spacing of the previously set estimation spot, the estimation position of the spot is estimated as a guide (S55). Then, the position of the estimation spot, and the recognition position of the stored spot are compared, and in the case where the recognition point of the recognized spot and the position of the estimation spot deviate widely, this recognition point is discarded (S56). Here, the position that deviates widely corresponds to a position or close to a position, where the recognition point of the spot is separated by approximately half of the space from the position of the estimation spot to the estimation spot adjacent to this. The widely deviated recognition point is considered to be one due to deposits of dirt or the like. Furthermore, in this processing, even if the brightness of the spot is comparatively weak, the object recognized as a spot by means of the first order difference and second order difference, is stored as a spot. Furthermore, the position of the estimation spot at this time is amended, and is associated with the recognized spot.

Then, based on the recognition points other than the discarded recognition point, determination of the position of the spot 90 is performed (S57). Furthermore, in the brightness computing section 107, the start point or the finish point (the periphery of the spot) of the spot 90 is recognized as the brightness of the background, and the mean brightness of the spot portion is determined from this, and this is displayed (S58).. Regarding this, the background being the background of the spot 90 is made a reference, and from this, the area of the portion that protrudes as the spot 90 is calculated, and the brightness is obtained.

Subsequently, in the spot and microplate correlation recognizing section 108, based on the image analysis result, the total of the brightness for all of the recognized spots, and the average is calculated and displayed. Furthermore, the correlation between the position of the spot and the position of the detection substance on the microplate is displayed (S59). The display form of the microplate image plane is one where the detection substance is arrayed based on predetermined prescribed contents. By performing association between this and the spot, this can be used for analysis or the like by visual observation.

In this manner, the measurement results by the scanner unit 20 are input to the image data analysis processing device, and the analysis spot that emits fluorescence is judged and recognized, and the results are displayed on a display unit or are printed by a printer.

Consequently, according to the second embodiment, a construction is adopted which uses the difference value when recognizing the spot and the strand, and recognizes the position of these based on the brightness change point. Therefore, even in the case where the background of the spot and the strand is different (is not specified), recognition of the spot and the strand is accurately and efficiently performed. Furthermore, there is the effect that the central position of the spot is easily and accurately obtained. Moreover, correspondence is given to the spots on the microplate which are arranged in matrix form on a plane surface, and the relationship between the position of the spot and the position on the microplate is recognized, and the image is displayed on the microplate image plane. Because of this, there is the effect that ascertaining the image analysis results is standardized and easily performed.

Next is a description of the analysis processing method and device according to a third embodiment.
Regarding the analysis processing contents, the center of a bounding box described in the first embodiment is set at the center of the spot or the marker and stored, and the position of a prediction strand is compensated from a scan in the longitudinal direction of the image afresh, and based on this compensated prediction strand, using the method of the first order difference and the second order difference of the image data used in the second embodiment, the position of the spot is recognized and compensation is performed to determine the spot position.

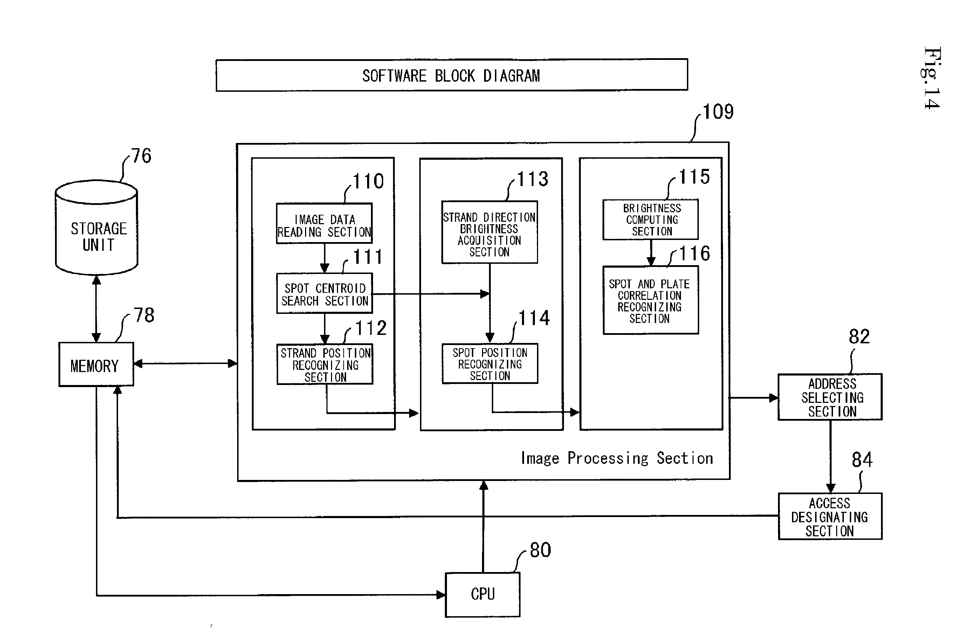

FIG. 14 shows the analysis processing device. This analysis processing device comprises; an image processing section 109 comprising a program, and a storage unit 76, a memory 78, a CPU 80, an address selecting section 82, and an access designating section 84. The software of the image processing section 109, as shown in FIG. 14 comprises; an image data reading section 110, a spot centroid search section 111, a strand position recognizing section 112, a strand direction brightness acquisition section 113, a spot position recognizing section 114, a brightness computing section 115, and a spot and microplate (plate) correlation recognizing section 116.

The software of the image processing section 109 is made in modules for each of the processing sections, and adopts a form which is highly flexible and extendable (version upgrade). Furthermore, regarding: the setting value of the inspection box for specifying the type of spot, the position of the estimation strand, and the position of the estimation spot, and the like, these are parameterized, and parameters of such setting values and the like are constructed so as to be appropriately changeable.

The image data reading section 110 converts the image data which has been changed into an electrical signal by the scanner which scans the integrated wound body, into a digital signal by an AD converter, and reads this into a predetermined region of the memory 78 for each pixel constituting the image data. The spot centroid search section 111 uses the inspection box 92 and performs differentiation between the spot 90 and noise, and determines the marker 8, or uses a bounding box 93 and searches the central position of the spot 90.

The strand position recognizing section 112, in order to compute the correlation for the detection positions on the microplate 3, recognizes the position of the strand while correcting based on the image data for the longitudinal direction perpendicular to the direction of the strand 4. The strand direction brightness acquisition section 113 acquires the brightness based on the recognized strand 4. The spot position recognizing section 114 predicts the position of the spot based on the difference values for the first order difference and the second order difference of the brightness for each of the pixels which constitute the spot along the strand, and adds a correction to this and determines the spot position. The brightness computing section 115 calculates and displays the average brightness of the spot portion with respect to the background. The spot and microplate correlation recognizing section 116, based on the image analysis results, recognizes and displays the correlation between the position of the spot 90 and the position of the detection substance on the microplate 3. The hardware structure of the image analysis processing device is the same as the structure shown in FIG. 2.

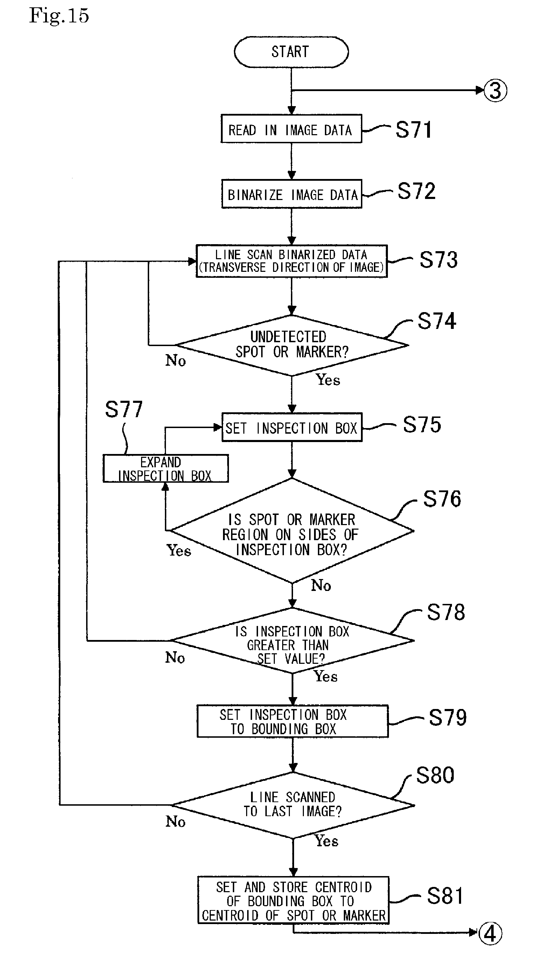

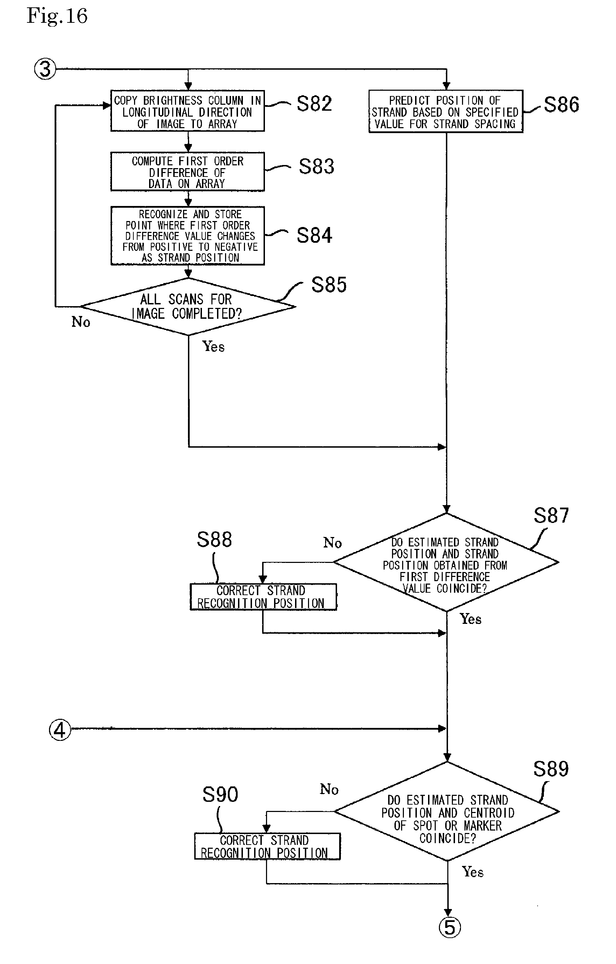

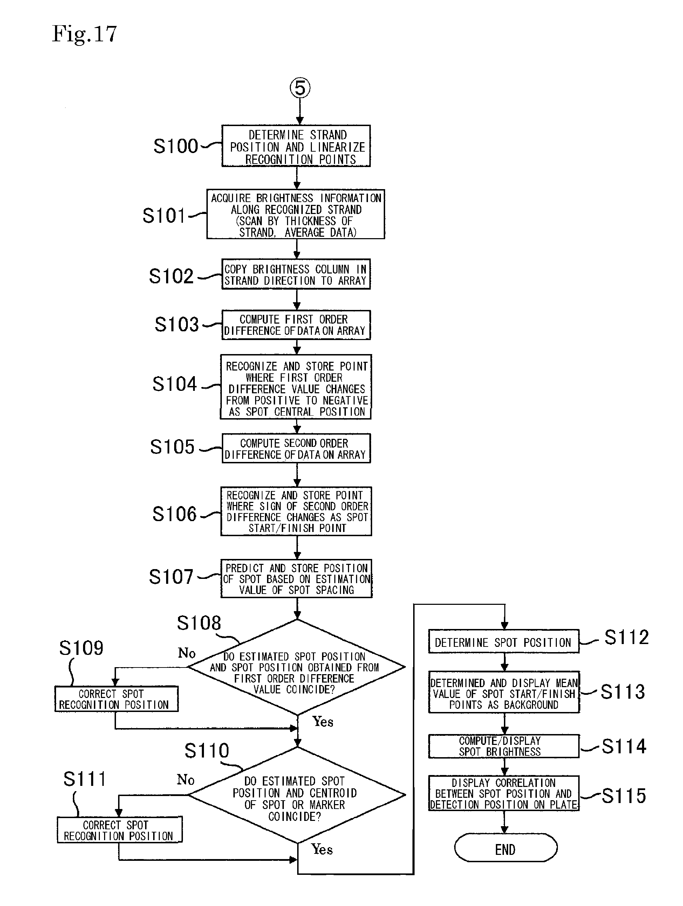

FIG. 15 to FIG. 17 show a flow chart for an image analysis process that recognizes the reaction results of the test sample (detection substance) arrayed on the integrated wound body 12, by image analysis, and assay. Hereunder is a description of the analysis and recognition processing of the image data here, based on a flow chart.
At first, the image data reading section 110 reads in the image data related to the detection substance on the strand, from the scanner unit 20 (S21), and binarizes this into black and white data in the image data binarizing section (S72).

Then, in the spot centroid search section 111, the spot is detected by the following line scans, the inspection box 92 and the bounding box 93 are set, and the center of the spot or the marker is searched for. At first, a line scan of the binarized image data is performed (S73). By means of this line scan, the sequential spots 90 are detected, and recognized, and are analyzed until there are no more undetected spots (S74). If there is an undetected spot, setting of the inspection box 92 of a rectangular shape or square shape that encloses the spot 90 is performed (S75). Furthermore, as shown below, differentiation of the spot 90 in the spot centroid search section 111, and recognizing the size and the position of the center, and the like is performed. The spot 90 comprises pixels 91, and when a pixel 91 is detected by line scan, the inspection box 92 of a square shape of a constant range is set with this pixel 91 at the center.

Furthermore, in the inspection box 92, of the four sides enclosing the pixel 91, the side in the direction in which the pixel 91 exists is moved parallel by just a predetermined distance, and it is judged whether or not there is a spot region in the respective sides of the inspection box 92 (S76), and if so, expansion of the inspection box 92 is performed (S77). In the case where there is no spot region, it is determined if the inspection box 92 has a size of a predetermined set value or more which becomes the reference (S78). From this result, in the case where the spot 90 does not satisfy the aforementioned set value, this spot 90 is determined to be noise, and the processing returns to the line scan (S73).

If the inspection box 92 is a size greater than a set value, this is determined to be an effective spot due to the detection substance 6. Then, the inspection box 92 at this time is determined as a bounding box 93 and the setting is registered (S79). Then, it is judged if the line scan has been completed to the last picture image (S80), and if part way, the processing returns to the stop (S73) of the line scan, To continue, the centroid (center) of the determined bounding box is set and stored as the center of the spot or the marker (S81). This bounding box 93, as shown in (FIG. 5 (4)), is a region enclosing the perimeter of the spot.

Next, in the strand position recognizing section 112, the strand position is recognized from the brightness column for the image data scanned in the longitudinal direction, and this strand position is corrected and the position of the strand is determined. Here, the image data is scanned in the longitudinal direction (the direction perpendicular to the direction of the strand 4), and the brightness column in the longitudinal direction is copied to an array as a variable column for the serial number (S82). Then, for the brightness data on the array, a first order difference is computed (S83), and the point where the sign of this first order difference changes from positive to negative is recognized as the strand position, and this position is stored (S84). If the scan has been completed for all of the image data, the processing advances to the next process (S85). On the other hand, in parallel with this, the position of the strand is predicted based on the specified value for the strand spacing, and the estimation strand position is obtained (S86).

Subsequently, a comparison is made as to whether or not the estimation strand position and the strand position obtained from the first order difference value coincide (S87). In the case where these do not coincide, the estimation strand position is amended by that amount, and correction of the strand recognition position is performed (S88). Furthermore, a comparison is made as to whether or not the corrected estimation strand position coincides with the centroid (center) of the spot or the marker which is set and stored, based on the bounding box (S89). In the case where the comparison result is that these do not coincide, the estimation strand position is further amended, and correction of the strand recognition position is performed (S90).

In this correction, the central position of the spot obtained by the bounding box is made a normal position, and correction of the strand recognition position is performed to this. In performing this correction, in the correction based on the estimation strand position, correction may be made over the strands for all stages. On the other hand, regarding the spot obtained by the bounding box (one where the strand positions for all of the stages do not necessarily exist), the presence thereof is definite. This means that by correcting the central position of the spot for this as a relatively correct position, the correction based on the estimation strand is complimentary.

Then, the strand position is determined. Moreover linearization of the recognized point of the determined recognized strand is performed (S100). This linearization is a collinear approximation by the leased square method to the point column of the strand position obtained by the first order difference. Basically, since the strand is wound along the groove of the cylindrical core, when this is corrected to a two dimensional image, it is expressed in a straight line form. Therefore it becomes a compliment for the straight line. By making a compliment for the straight line, the noise manifesting on the strand due to deposits of dirt and the like can be invalidated and cancelled. Subsequently, in the strand direction brightness acquisition section 113, the brightness information is acquired along the recognized strand (S101). This brightness information is that for where the brightness information of the data scanned for the strand thickness is averaged. Then, the brightness column in the strand direction based on the brightness information, is copied to an array as a variable column for the serial number (S102).

Next, in the spot position recognizing section 114, the position of the spot is recognized by the first order difference and second order difference. At first, the first order difference of the image data on the array is computed (S103). With the first order difference, the difference value for the image data that has been quantized and arrayed is computed. At this time, in the case where the brightness increases, the first order difference value shows a positive, and in the case where the brightness decreases, the first order difference value shows a negative. Furthermore, the point where the sign of the first order difference changes from positive to negative is recognized as the central position of the spot, and this position is stored (S104). At the approximate center of a spot of a predetermined size, the brightness changes (from light to dark). Therefore at this position, the difference value changes from positive to negative.

Furthermore, the second order difference of the data on the array is computed (S105). In the second order difference, at the portion where the brightness changes, the sign serving as the difference value changes. Here, the point where the sign of the second order difference changes is recognized as the start point or finish point for the range of the size of the spot of the spot 90, and this is stored (S106). At this time, the range of the largest spot within those recognized for one spot is made the diameter of the spot. As a result, both ends of the diameter of the spot 90 can be recognized, and also the size of the spot 90 can be recognized.

Here a reassessment amendment is performed on the position of the stored spot 90. At first, based on the set value for the spacing of the previously determined estimation spot, the position of a spot is predicted and stored as a guide (S107). Then, the position of the previously estimated estimation spot and the stored spot position are compared (S108), and in the case these coincide, the estimation spot position is amended by just that difference, and correction of the spot recognition position is performed (S109).

Next, the corrected estimation spot position and the central position of the spot or the marker obtained based on the bounding box are compared, and in the case where they do not coincide, the estimation spot position is further amended and correction of the spot recognition position is performed (S111). In this correction, the central position of the spot obtained by the bounding box is made a normal position, and correction of the spot recognition position is performed to this. In performing this correction, in the correction based on the estimation spot position, correction may be made over all of the estimation spots. On the other hand, regarding the spot obtained by the bounding box, since this is bright and the presence thereof is definite, this means that by correcting the central position of this spot as a relatively correct position, the correction based on the estimation spot is complimentary.

After correcting the estimation spot, the position of the spot 90 is determined (S112). Furthermore, in the brightness computing section 115, the start point or the finish point (the periphery of the spot) of the spot 90 is recognized as the brightness of the background, and the mean brightness of the spot portion is determined from this, and this is displayed (S113). Regarding this, the background being the background of the spot 90 is made a reference, and from this, the area of the portion that protrudes as the spot 90 is calculated, and the brightness is obtained.

Next, in order to display the image processing results as a plane on an image of a microplate image plane 7 (spot position standardized) shown in FIG. 6 (left side), in the spot and microplate correlation recognizing section 116, calculation of the correlation between the position of the spot and the microplate position is performed. Therefore, the total of the brightness of all of the spots recognized based on the image analysis results, and the average, is computed and displayed (S 114). Furthermore, the correlation between the position of the spot and the position of the detection substance on the microplate is displayed (S115). The display form of the microplate image plane, is one where the detection substances are arrayed based on the predetermined prescribed contents. By associating this with the spot, this can be used for analysis or the like by visual observation.

In this manner, the measurement results by the scanner unit 20 are input to the image data analysis processing device, and the analysis spot that emits fluorescence is judged and recognized, and the results are displayed on a display device, or are printed by a printer.

Consequently, according to the third embodiment, by using the inspection box, recognition of the spot for which the position is not specified, is accurately efficiently performed. Furthermore, since the central position of the spot is judged based on the bounding box, the central position of the spot is obtained easily and accurately. Moreover, the estimation strand position is corrected based on the strand position recognized from the brightness column in the longitudinal direction. Furthermore by performing correction based on the central position of the spot obtained by the bounding box that is complimentary to this correction, the position of the strand is obtained with high accuracy.

Moreover, the estimation spot position is corrected based on the spot position recognized from the brightness column along the strand for which the accuracy is high. Furthermore, by performing correction based on the central position of the spot obtained by the bounding box that is complimentary to this correction, the position of the spot is obtained at high accuracy. Moreover, a construction is adopted which uses the difference value when recognizing the spot and the strand, and recognizes the position of these based on the brightness change point. Therefore, even in the case where the background of the spot and the strand is different (is not specified), recognition of the spot and the strand is accurately and efficiently performed. Furthermore, the central position of the spot is easily and accurately obtained. Moreover, correspondence is given to the spots on the microplate which are arranged in matrix form on a plane surface, and the relationship between the position of the spot and the position on the microplate is recognized and displayed. Because of this, there is the effect that ascertaining the image analysis results is standardized and easily performed.

### [Brief Description of the Reference Symbols]

- 4: Base substance (strand)
- 12: Wound body (integrated wound body)
- 90: Spot
- 92: Inspection box
- 93: Bounding box

## Claims

1. An analysis processing method for performing analysis of a base substance based on optical information from a wound object which is wound with a linear base substance in which biological substances of previously determined types are immobilized on spots, and a plurality of these immobilized spots are arranged at previously determined positions, comprising:
detecting a partial region belonging to the spots, by means of optical information obtained by scanning a surface of said wound body;
specifying the spots belonging thereto, based on said detected partial region; and
performing analysis of the spots based on the optical information from the specified spots.

2. An analysis processing method according to claim 1, wherein detecting said partial region is performed based on image data obtained by scanning the surface of said wound body.

3. An analysis processing method according to claim 2, wherein
detecting said partial region is performed by detecting a partial region of respective spots by a line scan, for said image data, and
specifying said spot is performed by setting an inspection box which encloses the partial region or all regions of the spot, and in a case where all regions of the spot are not contained inside the inspection box, enlarging the inspection box,
and for the specified spot, separating into a case where the size of said inspection box does not satisfy a predetermined set value, and a case where this is above the set value, and judging said spot to be valid or invalid, and analyzing the optical information from the spot.

4. An analysis processing method according to claim 3, comprising: setting a bounding box for where said inspection box is enlarged until it contains said spot; and specifying the spot by judging a center or a size of said spot, based on the bounding box.

5. An analysis processing method according to any one of claim 1 though claim 4, comprising;
providing a marker as a reference for specifying a position of a spot on which biological material is immobilized, as an object of analysis of said image data, and
on the other hand determining if said detected spot is a spot due to said biological material, or a spot due to the marker, based on the size of said bounding box.

6. An analysis processing method according to claim 4, wherein specifying said spot comprises:
setting an estimation base substance in which a position of the linear base substance on which said spots are arrayed in a predetermined spacing is previously estimated;
determining whether or not the estimation base substance passes through the center of said spot which is calculated based on said bounding box, and
in the case where it does not pass through the center, performing positioning to correct the position of said estimation base substance, and setting this position as the position of said base substance.

7. An analysis processing method according to claim 4, wherein specifying said spot comprises:
setting an estimation spot for which the position of said spot is previously estimated;
calculating a central position of said spot based on said bounding box;
calculating a relative position of a central distance between spots in a direction along said base substance, and a spot;
judging whether or not this is the position of said estimation spot, and
in the case where this is not the position of said estimation spot, performing positioning to amend the position of this estimation spot, and setting this position as the position of said spot.

8. An analysis processing method according to any one of claim 1 through claim 7, wherein analysis of said spot comprises:
calculating a relative position between a position of a spot on said base substance, and a position on a microplate on which wells are arranged in matrix form on a plane; and
associating the position of the spot on said base substance with the position on said microplate, and displaying this.

9. An analysis processing method according to claim 2, wherein specifying said spot comprises:
calculating a first order difference value of read image data;
recognizing a point where a sign of the first order difference value changes, as a position of a spot;
setting a position of a previously estimated estimation spot, and comparing the position of this estimation spot with the position of said recognized spot; and
of said recognized spot positions, making another spot excluding a spot displaced by a set spacing amount from the position of said estimation spot, a recognition position of said spot.

10. An analysis processing method according to claim 9, wherein specifying said spot comprises:
calculating a first order difference value of said read image data;
recognizing a point where a sign of the first order difference value changes, as a position of a linear base substance on which said detection substances are arrayed in a predetermined spacing;
setting a position of a previously estimated estimation base substance, and comparing the position of this estimation base substance with the position of said recognized base substance; and
of said recognized base substance positions, making the positions of a drawn out base substance excluding a point displaced by a set spacing amount from the position of said estimation base substance, said recognized base substance position.

11. An analysis processing method according to either one of claim 9 and claim 10, wherein specifying said spot comprises:
calculating a second order difference value of said read image data; and
recognizing a position where a sign of this second order difference value changes, as a start or finish position of a range of a spot.

12. An analysis processing method according to claim 2, wherein,
detecting said partial region is performed by detecting a partial region of respective spots by a line scan, for said image data, and
specifying said spot comprises;
performing setting of an inspection box which encloses the partial region or all regions of the spot; setting a bounding box for where said inspection box is enlarged until it contains said spot; and searching for a central position of said spot based on this bounding box;
scanning said wound body in a direction orthogonal to the winding direction of said base substance, and obtaining a position of said base substance;
comparing a previously estimated position of the base substance position with said obtained position of the base substance; correcting the recognized position of the estimation base substance, and determining the base substance position;
recognizing a point where a sign of a first order difference value of image data along the determined base substance position changes, as a central position of a spot, and specifying the spot position.

13. An analysis processing method according to claim 12, wherein determination of said base substance position comprises:
further comparing said corrected recognition position of the estimation base substance with a central position of said searched spot; and
performing correction of the recognition position of the estimation base substance.

14. An analysis processing method according to either one of claim 12 and claim 13, wherein specifying the position of said spot is performed by:
comparing the position of a previously estimated estimation spot with a central position of a spot recognized from said first order difference value;
correcting the recognized position of the estimation spot; and
again comparing the corrected estimation spot position with a central position of said searched spot, and correcting the recognition position of the estimation spot.

15. An analysis processing device that performs analysis based on optical information from a wound body on which is wound a linear base substance on which a plurality of spots on which biological substances of previously determined types are immobilized, are arranged at previously determined positions, comprising:
an optical information measuring device that scans a surface of said wound body and obtains image data;
a partial region detection device that, for the image data obtained by scanning the surface of said wound body, detects a partial region belonging to the respective spots by line scanning;
a spot specifying device that specifies respective spots belonging thereto, based on the partial region of said detected respective spots; and
an analysis device that performs analysis of the spots based on the specified respective spots.

16. An analysis processing device according to claim 15, wherein
said spot specifying device specifies by performing setting of an inspection box which encloses a part or all of said spots, and in a case where all regions of the spots are not contained inside the inspection box, enlarges the inspection box, and
said analysis device, for the specified spots, separates into a case where the size of said inspection box does not satisfy a predetermined set value, and a case where this is above the set value, and judges said spot to be valid or invalid, and also analyzes the optical information from the spots.

17. An analysis processing device according to claim 16, wherein
said partial region detection device has an image data binarizing section that binarizes said read image data, and
said spot specifying device has a spot recognizing section that sets a bounding box for which said inspection box is enlarged until it contains said spot, and judges a center or a size of said spot based on the bounding box.

18. An analysis processing device according to any one of claim 15 through claim 17, wherein said analysis device has a correlation recognizing section that calculates a correlation between a position of a spot on said base substance, and a position on a microplate arranged in matrix form on a plane; and associates the position of the spot on said base substance with the position on said microplate, and displays this.

19. An analysis processing device according to claim 15, wherein said spot specifying device has:
a difference value calculating section that calculates a first order difference value and a second order difference value of said read image data; and
a spot position recognizing section that recognizes a point where a sign of this first order difference value changes, as a position of a spot, compares a position of a previously estimated estimation spot with the position of said recognized spot, and makes another spot excluding a spot displaced by a set spacing amount from the position of said estimation spot, a recognition position of said spot, and recognizes a position where a sign of said second order difference value changes, as a start or finish position of a range of a spot.

20. An analysis processing device according to claim 15, wherein
said spot specifying device has:
a spot search section that; performs setting of an inspection box to enclose a part or all of said spots, sets a bounding box for which said inspection box is enlarged until it contains said spot, and searches the center of said spot based on the bounding box; and
a spot position recognizing section that;
scans said wound body in a direction orthogonal to the winding direction of said base substance, and obtains a position of said base substance,
compares a previously estimated position of the estimation base substance with said obtained position of the base substance,
corrects the recognized position of the estimation base substance and determines the base substance position,
recognizes a point where a sign of a first order difference value of image data along this base substance position changes, as a central position of a spot,
compares a previously estimated position of an estimation spot with a central position of said recognized spot, and corrects the recognition position of the estimation spot, and specifies the spot position.
